# EUROPÄISCHE PATENTANMELDUNG

(11) **EP 3 760 456 A1**
(43) Veröffentlichungstag der Anmeldung: **06.01.2021**
(21) Anmeldenummer: 20178322.2
(22) Anmeldetag: 04.06.2020
(51) Int. Cl.: B60C 23/04, G06K 19/077, H01Q 1/22, B60C 19/00, B60C 15/06

(54) **REIFEN**

(30) Priorität: 03.07.2019 DE 102019209779
(71) Anmelder: Continental Reifen Deutschland GmbH, 30165 Hannover (DE)
(72) Erfinder: Ehmke, Tobias, 30419 Hannover (DE)
(74) Vertreter: Finger, Karsten

(57) **Zusammenfassung**

Die Erfindung betrifft einen Reifen (1), wobei der Reifen (1) um eine Rotationsachse (2) in eine Umlaufrichtung (3) rotierbar ist, aufweisend eine Karkasseinlage (4), einen Schulterbereich (5), einen Seitenwandbereich (6) und eine elektromagnetische Sende- und Empfangsvorrichtung (7), wobei die Karkasseinlage (4) an den Seitenwandbereich (6) angrenzt und der Seitenwandbereich (6) eine Verstärkungskomponente (8), eine erste Seitenwandkomponente (9) und eine zweite Seitenwandkomponente (10) aufweist, wobei die erste Seitenwandkomponente (9) und die zweite Seitenwandkomponente (10) einen Seitenwandkomponentenbereich (21) bilden, wobei die elektromagnetische Sende- und Empfangsvorrichtung (7) zwischen der Verstärkungskomponente (8) und dem Seitenwandkomponentenbereich (21) angeordnet ist

## Beschreibung

Die Erfindung bezieht sich auf einen Reifen.
Die Erfindung geht aus von einem Reifen. Der Reifen ist um eine Rotationsachse in eine Umlaufrichtung rotierbar und weist eine Karkasseinlage, einen Schulterbereich, einen Seitenwandbereich und eine elektromagnetische Sende- und Empfangsvorrichtung auf.
Die Karkasseinlage grenzt an den Seitenwandbereich an. Der Seitenwandbereich weist eine Verstärkungskomponente, eine erste Seitenwandkomponente und eine zweite Seitenwandkomponente auf. Die zweite Seitenwandkomponente kann auch als Rimstripkomponente bezeichnet werden.
Die erste Seitenwandkomponente und die zweite Seitenwandkomponente bilden einen Seitenwandkomponentenbereich.

Bei der elektromagnetischen Sende- und Empfangsvorrichtung handelt es sich insbesondere um eine RFID-Vorrichtung. RFID steht für Radio Frequency Identification und bedeutet Identifizierung mit Hilfe elektromagnetischer Wellen. Elektromagnetisch bedeutet elektromagnetisch wirkend. Das bedeutet, dass die elektromagnetische Sende- und Empfangsvorrichtung eingerichtet ist, elektromagnetische Signale zu senden und zu empfangen.

Die Verstärkungskomponente ist insbesondere aus einer Kautschukmischung ausgebildet. Die Verstärkungskomponente verstärkt den Seitenwandbereich und stellt somit die Einsatzfähigkeit des Reifens sicher.
Aus dem Stand der Technik sind Reifen bekannt, die elektromagnetische Sende- und Empfangsvorrichtungen aufweisen. Beispielsweise wird in der EP2223814B1 eine elektromagnetische Sende- und Empfangsvorrichtung für einen Reifen offenbart.

Bei den aus dem Stand der Technik bekannten Reifen könnte eine Anordnung einer elektromagnetischen Sende- und Empfangsvorrichtung innerhalb des Reifens nicht optimal ausgestaltet sein. So könnte die elektromagnetische Sende- und Empfangsvorrichtung in einem solchen Bereich des Reifens angeordnet sein, in dem sie höheren mechanischen Belastungen ausgesetzt sein könnte als in anderen Bereichen des Reifens.
Der Erfindung liegt daher die Aufgabe zugrunde einen Reifen bereitzustellen, bei dem die Anordnung der elektromagnetischen Sende- und Empfangsvorrichtung innerhalb des Reifens verbessert wird.
Gelöst wird die erfindungsgemäße Aufgabe dadurch, dass die elektromagnetische Sende- und Empfangsvorrichtung zwischen der Verstärkungskomponente und dem Seitenwandkomponentenbereich angeordnet ist.

Durch den erfindungsgemäßen Umstand, wonach die elektromagnetische Sende- und Empfangsvorrichtung zwischen der Verstärkungskomponente und dem Seitenwandkomponentenbereich angeordnet ist, wird die elektromagnetische Sende- und Empfangsvorrichtung in einem solchen Bereich des Reifens angeordnet, in dem sie in einer ausreichenden räumlichen Nähe zu der Verstärkungskomponente des Reifens angeordnet ist. Durch diese Nähe zu der Verstärkungskomponente kann die elektromagnetische Sende- und Empfangsvorrichtung vor mechanischen Belastungen besser geschützt werden, als es in anderen Bereichen des Reifens der Fall wäre.
Somit wird ein verbesserter Reifen bereitgestellt.
Bei dem Reifen handelt es sich insbesondere um einen Lkw-Reifen, um einen Pkw-Reifen oder um einen Fahrrad-Reifen oder um einen Motorrad-Reifen.

Weitere vorteilhafte Ausgestaltungsformen der vorliegenden Erfindung sind Gegenstand der Unteransprüche.
Gemäß einer vorzugsweisen Ausgestaltungsform der vorliegenden Erfindung ist die elektromagnetische Sende- und Empfangsvorrichtung zwischen der Verstärkungskomponente und der ersten Seitenwandkomponente angeordnet oder zwischen der Verstärkungskomponente und der zweiten Seitenwandkomponente angeordnet.

Gemäß einer nächsten vorzugsweisen Ausgestaltungsform der vorliegenden Erfindung steht die elektromagnetische Sende- und Empfangsvorrichtung in direktem Kontakt mit der Verstärkungskomponente und ist insbesondere stoffschlüssig mit der Verstärkungskomponente verbunden.

Gemäß einer nächsten vorzugsweisen Ausgestaltungsform der vorliegenden Erfindung weist die Verstärkungskomponente einen ersten Endpunkt und einen zweiten Endpunkt auf. Der erste Endpunkt liegt in einer radialen Richtung von der Rotationsachse am weitesten entfernt und der zweite Endpunkt liegt in der radialen Richtung der Rotationsachse am nächsten. Ein radialer Abstand eines ersten Oberflächenpunktes der elektromagnetischen Sende- und Empfangsvorrichtung, der zur Rotationsachse in der radialen Richtung nächstgelegen ist, ist zu der Rotationsachse mindestens 2 mm größer, als ein radialer Abstand des zweiten Endpunktes zur Rotationsachse. Ein radialer Abstand des ersten Endpunktes zu der Rotationsachse ist mindestens 2 mm größer, als ein radialer Abstand zu der Rotationsachse eines zweiten Oberflächenpunktes der elektromagnetischen Sende- und Empfangsvorrichtung, der von der Rotationsachse am weitesten entfernt liegt.
Der Reifen folgt grundsätzlich einer Form eines Kreises. Ein radialer Abstand oder eine radiale Richtung erstrecken sich parallel zu einem Radius des Kreises dessen Form der Reifen grundsätzlich folgt. Der Radius liegt rechtwinklig zur Rotationsachse und zur Umlaufrichtung. Ein radialer Abstand ist stets ein Abstand bis zur Rotationsachse.
Auch die Verstärkungskomponente folgt einer Kreisform.
Durch den erfindungsgemäßen Umstand, wonach die Verstärkungskomponente einen ersten Endpunkt und einen zweiten Endpunkt aufweist, wobei der erste Endpunkt in einer radialen Richtung von der Rotationsachse am weitesten entfernt liegt und wobei der zweite Endpunkt in der radialen Richtung der Rotationsachse am nächsten liegt, wobei ein radialer Abstand eines ersten Oberflächenpunktes der elektromagnetischen Sende- und Empfangsvorrichtung, der zur Rotationsachse in der radialen Richtung nächstgelegen ist, zu der Rotationsachse mindestens 2 mm größer ist, als ein radialer Abstand des zweiten Endpunktes zur Rotationsachse, und, wonach ein radialer Abstand des ersten Endpunktes zu der Rotationsachse mindestens 2 mm größer ist, als ein radialer Abstand zu der Rotationsachse eines zweiten Oberflächenpunktes der elektromagnetischen Sende- und Empfangsvorrichtung, der von der Rotationsachse am weitesten entfernt liegt, werden insbesondere mechanische Belastungen der elektromagnetischen Sende- und Empfangsvorrichtung, die an den Endpunkten der Verstärkungsvorrichtung auftreten könnten, vermieden.

Gemäß einer nächsten vorzugsweisen Ausgestaltungsform der vorliegenden Erfindung weist die elektromagnetische Sende- und Empfangsvorrichtung eine Gummiummantelung auf. Dabei ist die Gummiummantelung insbesondere Bestandteil der elektromagnetischen Sende- und Empfangsvorrichtung.
Innerhalb der Gummiummantelung sind elektronische und elektrische Komponenten der elektromagnetischen Sende- und Empfangsvorrichtung angeordnet. Der erste Oberflächenpunkt der elektromagnetischen Sende- und Empfangsvorrichtung liegt dann auf der Oberfläche der Gummiummantelung. Die Oberfläche der Gummiummantelung ist eine von der elektromagnetischen Sende- und Empfangsvorrichtung weg orientierte Außenfläche. Die Gummiummantelung ist insbesondere quaderförmig oder ellipsoid ausgebildet, wobei insbesondere eine maximale Dicke der elektromagnetischen Sende- und Empfangsvorrichtung von 2 mm, eine dazu rechtwinklig sich erstreckende maximale Länge der elektromagnetischen Sende- und Empfangsvorrichtung von 80 mm und eine sich zu Dicke und Länge rechtwinklig erstreckende maximale Breite der elektromagnetischen Sende- und Empfangsvorrichtung von 20 mm nicht überschritten wird. Die elektronischen und elektrischen Komponenten der elektromagnetischen Sende- und Empfangsvorrichtung weisen insbesondere zusammen eine maximale räumliche Erstreckung von höchstens 70 mm auf. Die Antenne oder die Antennen der elektromagnetischen Sende- und Empfangsvorrichtung weist beziehungsweise weisen insbesondere für den Fall, wonach die Antenne beziehungsweise die Antennen einer Helixform folgt beziehungsweise folgen, einen Außendurchmesser von höchstens 2 mm auf.

Die elektromagnetische Sende- und Empfangsvorrichtung weist gemäß einer vorteilhaften Ausführungsform der Erfindung insbesondere eine oder zwei Antennen auf. Die Antenne beziehungsweise die zwei Antennen sind insbesondere helixförmig.

Durch den erfindungsgemäßen Umstand, wonach die elektromagnetische Sende- und Empfangsvorrichtung eine Gummiummantelung aufweist, wobei die Gummiummantelung insbesondere Bestandteil der elektromagnetische Sende- und Empfangsvorrichtung ist, wird eine homogene Umgebung geschaffen, die eine elektromagnetische Abstimmung der elektromagnetischen Sende- und Empfangsvorrichtung auf ihre Umgebung erleichtert.
Gemäß einer nächsten vorzugsweisen Ausgestaltungsform der vorliegenden Erfindung beträgt ein minimaler Abstand der Gummiummantelung zu dem ersten Endpunkt mindestens 5 mm und insbesondere mindestens 0,1 mm bis mindestens 5 mm.
Durch den erfindungsgemäßen Umstand, wonach ein minimaler Abstand der Gummiummantelung zu dem ersten Endpunkt mindestens 5 mm beträgt, werden insbesondere mechanische Belastungen der Gummiummantelung, die an dem ersten Endpunkt auftreten könnten, vermieden.

Gemäß einer nächsten vorzugsweisen Ausgestaltungsform der vorliegenden Erfindung beträgt ein minimaler Abstand der Gummiummantelung zu dem zweiten Endpunkt mindestens 5 mm und insbesondere mindestens 0,1 mm bis mindestens 5 mm.

Durch den erfindungsgemäßen Umstand, wonach ein minimaler Abstand der Gummiummantelung zu dem zweiten Endpunkt mindestens 5 mm beträgt, werden insbesondere mechanische Belastungen der Gummiummantelung, die an dem zweiten Endpunkt auftreten könnten, vermieden.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines erfindungsgemäßen Reifens in Radialschnittansicht;
Fig. 2: Eine schematische Darstellung eines erfindungsgemäßen Reifens gemäß einer weiteren Ausführungsform in Radialschnittansicht;
Fig. 3: Eine schematische Darstellung eines erfindungsgemäßen Reifens gemäß einer weiteren Ausführungsform in Radialschnittansicht.

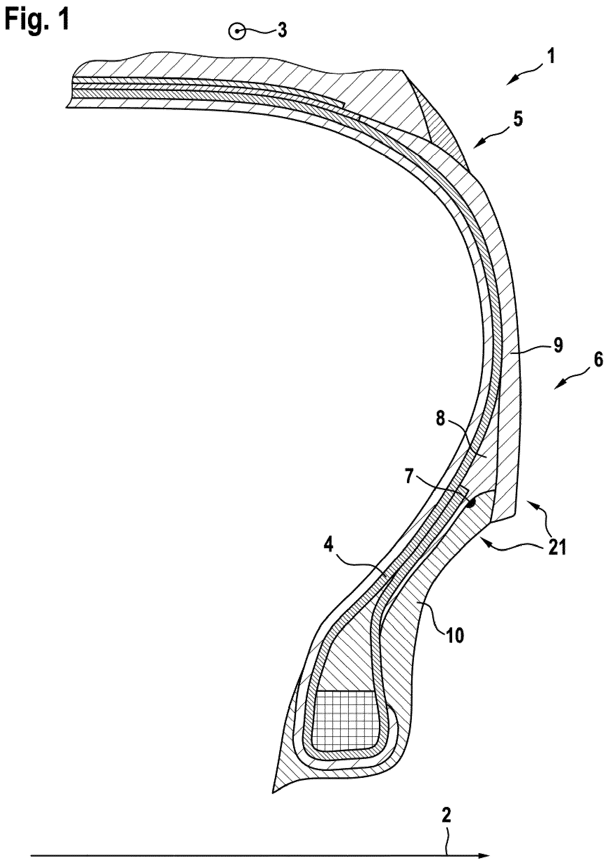

In der Figur 1 ist ein erfindungsgemäßer Reifen 1 schematisch in Radialschnittansicht dargestellt. Der Reifen 1 ist um eine Rotationsachse 2 in eine Umlaufrichtung 3 rotierbar.
Der Reifen 1 weist eine Karkasseinlage 4, einen Schulterbereich 5, einen Seitenwandbereich 6 und eine elektromagnetische Sende- und Empfangsvorrichtung 7 auf. Die Karkasseinlage 4 grenzt an den Seitenwandbereich 6 an. Der Seitenwandbereich 6 weist eine Verstärkungskomponente 8, eine erste Seitenwandkomponente 9 und eine zweite Seitenwandkomponente 10 auf, wobei die erste Seitenwandkomponente 9 und die zweite Seitenwandkomponente 10 einen Seitenwandkomponentenbereich 21 bilden.
Die elektromagnetische Sende- und Empfangsvorrichtung 7 ist zwischen der Verstärkungskomponente 8 und dem Seitenwandkomponentenbereich 21 angeordnet.
Ferner steht gemäß der in der Figur 1 dargestellten Ausführungsform des erfindungsgemäßen Reifens 1 die elektromagnetische Sende- und Empfangsvorrichtung 7 in direktem Kontakt mit der Verstärkungskomponente 8 und ist insbesondere stoffschlüssig mit der Verstärkungskomponente 8 verbunden.

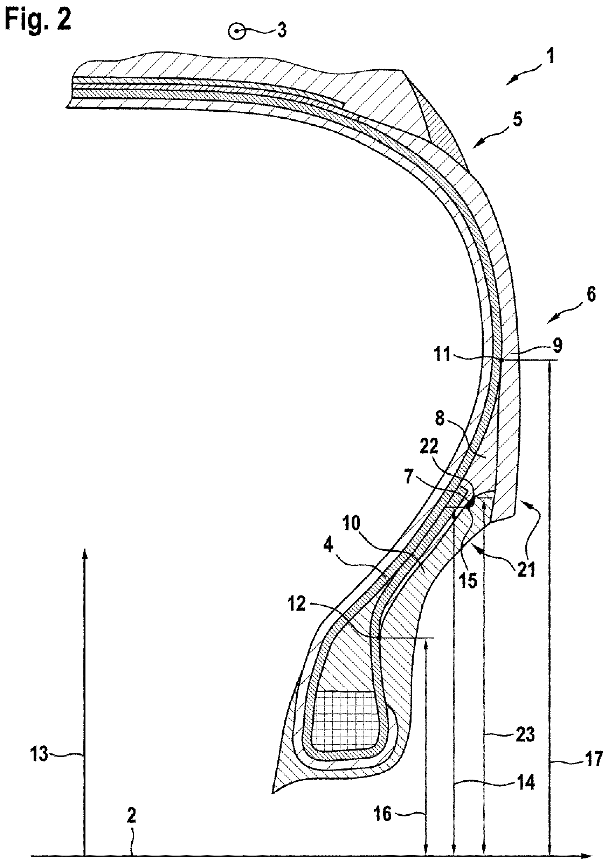

In der Figur 2 ist ein erfindungsgemäßer Reifen 1 in Radialschnittansicht gemäß einer weiteren Ausführungsform schematisch dargestellt. Gemäß der Darstellung der in der Figur 2 dargestellten Ausführungsform weist die Verstärkungskomponente 8 einen ersten Endpunkt 11 und einen zweiten Endpunkt 12 auf, wobei der erste Endpunkt 11 in einer radialen Richtung 13 von der Rotationsachse 2 am weitesten entfernt liegt und wobei der zweite Endpunkt 12 in der radialen Richtung 13 der Rotationsachse 2 am nächsten liegt, wobei ein radialer Abstand 14 eines ersten Oberflächenpunktes 15 der elektromagnetischen Sende- und Empfangsvorrichtung 7, der zur Rotationsachse 2 in der radialen Richtung 13 nächstgelegen ist, zu der Rotationsachse 2 mindestens 2 mm größer ist, als ein radialer Abstand 16 des zweiten Endpunktes 12 zur Rotationsachse 2, und, wobei ein radialer Abstand 17 des ersten Endpunktes 11 zu der Rotationsachse 2 mindestens 2 mm größer ist, als ein radialer Abstand 23 zu der Rotationsachse 2 eines zweiten Oberflächenpunktes 22 der elektromagnetischen Sende- und Empfangsvorrichtung 7, der von der Rotationsachse 2 am weitesten entfernt liegt.

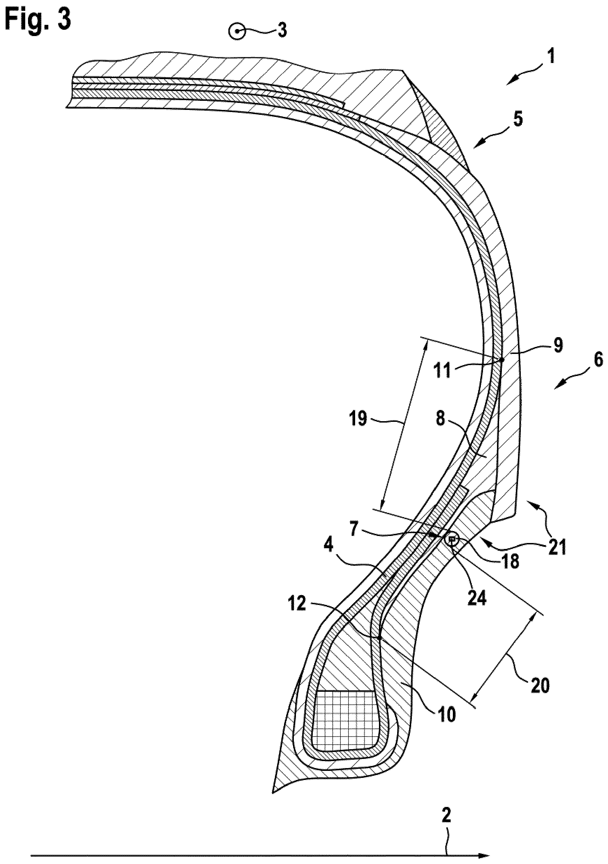

In der Figur 3 ist ein erfindungsgemäßer Reifen 1 in Radialschnittansicht gemäß einer weiteren Ausführungsform schematisch dargestellt. Gemäß der Darstellung in der Figur 3 weist die elektromagnetische Sende- und Empfangsvorrichtung 7 eine Gummiummantelung 18 auf. Die Gummiummantelung 18 ist insbesondere Bestandteil der elektromagnetischen Sende- und Empfangsvorrichtung 7. Innerhalb der Gummiummantelung 18 sind elektrische und elektronische Komponenten 24 angeordnet. Diese Komponenten 24 und die Gummiummantelung 18 bilden die elektromagnetische Sende- und Empfangsvorrichtung 7

Insbesondere beträgt ein minimaler Abstand 19 der Gummiummantelung 18 zu dem ersten Endpunkt 11 mindestens 5 mm und ein minimaler Abstand 20 der Gummiummantelung 18 zu dem zweiten Endpunkt 12 beträgt mindestens 5 mm.

### Bezugszeichenliste

### (ist Teil der Beschreibung)

- 1: Reifen
- 2: Rotationsachse
- 3: Umlaufrichtung
- 4: Karkasseinlage
- 5: Schulterbereich
- 6: Seitenwandbereich
- 7: Elektromagnetische Sende- und Empfangsvorrichtung
- 8: Verstärkungskomponente
- 9: Erste Seitenwandkomponente
- 10: Zweite Seitenwandkomponente
- 11: Erster Endpunkt
- 12: Zweiter Endpunkt
- 13: Radiale Richtung
- 14: Radialer Abstand
- 15: Erster Oberflächenpunkt
- 16: Radialer Abstand
- 17: Radialer Abstand
- 18: Gummiummantelung
- 19: Minimaler Abstand
- 20: Minimaler Abstand
- 21: Seitenwandkomponentenbereich
- 22: Zweiter Oberflächenpunkt
- 23: Radialer Abstand
- 24: Elektrische und elektronische Komponenten

## Patentansprüche

1. Reifen (1), wobei der Reifen (1) um eine Rotationsachse (2) in eine Umlaufrichtung (3) rotierbar ist, aufweisend eine Karkasseinlage (4), einen Schulterbereich (5), einen Seitenwandbereich (6) und eine elektromagnetische Sende- und Empfangsvorrichtung (7), wobei die Karkasseinlage (4) an den Seitenwandbereich (6) angrenzt und der Seitenwandbereich (6) eine Verstärkungskomponente (8), eine erste Seitenwandkomponente (9) und eine zweite Seitenwandkomponente (10) aufweist, wobei die erste Seitenwandkomponente (9) und die zweite Seitenwandkomponente (10) einen Seitenwandkomponentenbereich (21) bilden, **dadurch gekennzeichnet, dass** die elektromagnetische Sende- und Empfangsvorrichtung (7) zwischen der Verstärkungskomponente (8) und dem Seitenwandkomponentenbereich (21) angeordnet ist.

2. Reifen (1) nach Anspruch 1, **dadurch gekennzeichnet, dass** die elektromagnetische Sende- und Empfangsvorrichtung (7) zwischen der Verstärkungskomponente (8) und der ersten Seitenwandkomponente (9) angeordnet ist oder zwischen der Verstärkungskomponente (8) und der zweiten Seitenwandkomponente (10) angeordnet ist.

3. Reifen (1) nach einem der vorhergehenden Ansprüche, **dadurch gekennzeichnet, dass** die elektromagnetische Sende- und Empfangsvorrichtung (7) in direktem Kontakt mit der Verstärkungskomponente (8) steht und insbesondere stoffschlüssig mit der Verstärkungskomponente (8) verbunden ist.

4. Reifen (1) nach einem der vorhergehenden Ansprüche, **dadurch gekennzeichnet, dass** die Verstärkungskomponente (8) einen ersten Endpunkt (11) und einen zweiten Endpunkt (12) aufweist, wobei der erste Endpunkt (11) in einer radialen Richtung (13) von der Rotationsachse (2) am weitesten entfernt liegt und wobei der zweite Endpunkt (12) in der radialen Richtung (13) der Rotationsachse (2) am nächsten liegt, wobei ein radialer Abstand (14) eines ersten Oberflächenpunktes (15) der elektromagnetischen Sende- und Empfangsvorrichtung (7), der zur Rotationsachse (2) in der radialen Richtung (13) nächstgelegen ist, zu der Rotationsachse (2) mindestens 2 mm größer ist, als ein radialer Abstand (16) des zweiten Endpunktes (12) zur Rotationsachse (2), und, dass ein radialer Abstand (17) des ersten Endpunktes (11) zu der Rotationsachse (2) mindestens 2 mm größer ist, als ein radialer Abstand (23) zu der Rotationsachse (2) eines zweiten Oberflächenpunktes (22) der elektromagnetischen Sende- und Empfangsvorrichtung (7), der von der Rotationsachse (2) am weitesten entfernt liegt.

5. Reifen (1) nach einem der vorhergehenden Ansprüche, **dadurch gekennzeichnet, dass** die elektromagnetische Sende- und Empfangsvorrichtung (7) eine Gummiummantelung (18) aufweist, wobei die Gummiummantelung (18) insbesondere Bestandteil der elektromagnetische Sende- und Empfangsvorrichtung (7) ist.

6. Reifen (1) nach dem vorhergehenden Anspruch, **dadurch gekennzeichnet, dass** ein minimaler Abstand (19) der Gummiummantelung (18) zu dem ersten Endpunkt (11) **mindestens 5 mm** beträgt und/oder dass ein minimaler Abstand (20) der Gummiummantelung (18) zu dem zweiten Endpunkt (12) **mindestens 5 mm** beträgt.
